(19) Europäisches Patentamt
European Patent Office
Office européen des brevets

(11) Veröffentlichungsnummer: **0 250 367**
**A2**

# (12) EUROPÄISCHE PATENTANMELDUNG

(21) Anmeldenummer: **87810341.5**

(22) Anmeldetag: **15.06.87**

(51) Int. Cl.4: **C 07 F 9/15**
C 07 F 9/145, C 08 K 5/52

(30) Priorität: **19.06.86 CH 2483/86**

(43) Veröffentlichungstag der Anmeldung:
**23.12.87 Patentblatt 87/52**

(84) Benannte Vertragsstaaten: **DE FR GB IT**

(71) Anmelder: **CIBA-GEIGY AG**
**Klybeckstrasse 141**
**CH-4002 Basel (CH)**

(72) Erfinder: **Rosenberger, Siegfried**
**Im Gehracker 11**
**CH-4125 Riehen (CH)**

**Meier, Hans-Rudolf, Dr.**
**Rte du Confin 54**
**CH-1723 Marly (CH)**

(54) **Neue Stabilisatoren für organische Polymere.**

(57) Verbindungen der Formel I,

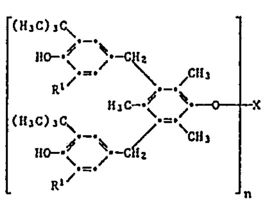

(I)

worin n 1, 2 oder 3 ist, $R^1$ $C_1$-$C_5$-Alkyl, Cyclohexyl oder α-Methylcyclohexyl bedeutet und wenn n 1 ist, X eine Gruppe der Formel II oder III darstellt,

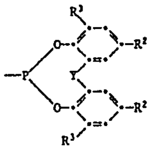

(II),

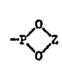

(III)

worin $R^2$ und $R^3$ unabhängig voneinander $C_1$-$C_8$-Alkyl oder Cyclohexyl bedeuten, Y eine direkte Bindung, -S-, >S=O oder ein Rest $-CR^4R^5$-ist, worin $R^4$ Wasserstoff, $C_1$-$C_8$-Alkyl, $C_5$-$C_8$-Cycloalkyl, Phenyl oder Benzyl bedeutet und $R^5$ Wasserstoff oder $C_1$-$C_8$-Alkyl ist, Z 1,2-oder 1,3-Alkylen mit höchstens 15 Kohlenstoffatomen oder o-Phenylen bedeutet, und wenn n 2 ist, X eine Gruppe der Formel IV oder V darstellt,

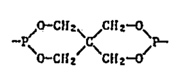

(IV)

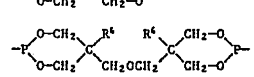

(V)

worin $R^6$ Methyl oder Ethyl ist, und wenn n 3 bedeutet, X ein Phosphoratom darstellt, eignen sich zum Stabilisieren von organischem Material gegen lichtinduzierten und/oder thermooxidativen Abbau.

EP 0 250 367 A2

**Beschreibung**

Neue Stabilisatoren für organische Polymere

Die vorliegende Erfindung betrifft neue sterisch gehinderte Phosphite, deren Verwendung zum Stabilisieren von organischem Material und das mit deren Hilfe gegen thermooxidativen und/oder lichtinduzierten Abbau stabilisierte organische Material.

Aus der US-Patentschrift 2 847 443 sind Phosphite von Pentaerythrit sowie deren Verwendung zum Stabilisieren von Vinyl- und Vinylidenharzen bekannt. In der japanischen Offenlegungsschrift 74-128044 werden Polypropylenzusammensetzungen beschrieben, die ein sterisch gehindertes Phosphit von Pentaerythrit und eine Metallseife enthalten.

Gegenstand der Erfindung sind Verbindungen der Formel I,

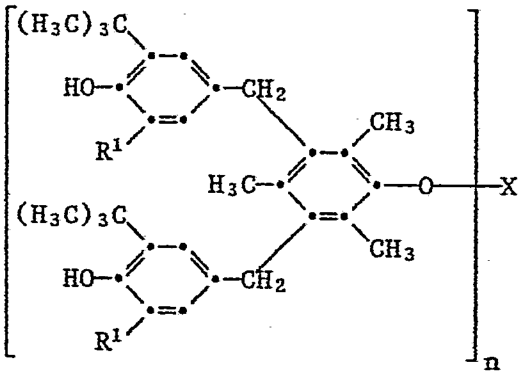

(I)

worin n 1, 2 oder 3 ist, $R^1$ $C_1$-$C_5$-Alkyl, Cyclohexyl oder $\alpha$-Methylcyclohexyl bedeutet und wenn n 1 ist, X eine Gruppe der Formel II oder III darstellt,

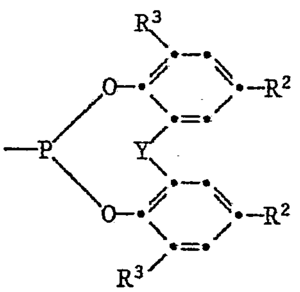

(II),

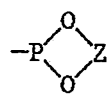

(III)

worin $R^2$ und $R^3$ unabhängig voneinander $C_1$-$C_8$-Alkyl oder Cyclohexyl bedeuten, Y eine direkte Bindung, -S-, $>S=O$ oder ein Rest -$CR^4R^5$-ist, worin $R^4$ Wasserstoff, $C_1$-$C_8$-Alkyl, $C_5$-$C_8$-Cycloalkyl, Phenyl oder Benzyl bedeutet und $R^5$ Wasserstoff oder $C_1$-$C_8$-Alkyl ist, Z 1,2-oder 1,3-Alkylen mit höchstens 15 Kohlenstoffatomen oder o-Phenylen bedeutet, und wenn n 2 ist, X eine Gruppe der Formel IV oder V darstellt,

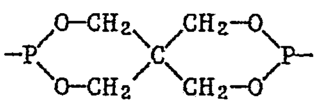

(IV)

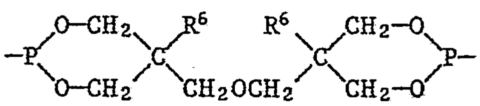

(V)

worin $R^6$ Methyl oder Ethyl ist, und wenn n 3 bedeutet, X ein Phosphoratom darstellt.

$R^1$ bedeutet als $C_1$-$C_5$-Alkyl beispielsweise Methyl, Ethyl, Propyl, Isopropyl, Butyl, Isobutyl, tert-Butyl, Pentyl oder Isopentyl. Methyl und tert-Butyl sind bevorzugt und besonders bevorzugt ist tert-Butyl.

$R^2$, $R^3$, $R^4$ und $R^5$ können als $C_1$-$C_8$-Alkyl zum Beispiel die oben für $R^1$ angegebenen Bedeutungen besitzen sowie zusätzlich Hexyl, Heptyl, Octyl oder Isooctyl sein. $C_1$-$C_4$-Alkyl ist bevorzugt. $R_2$ und $R_3$ sind besonders bevorzugt Methyl oder tert-Butyl.

$R^4$ bedeutet als $C_5$-$C_8$-Cycloalkyl beispielsweise Cyclopentyl, Cyclohexyl, Cycloheptyl oder Cyclooctyl. Cyclohexyl ist bevorzugt.

Als Beispiele für die Gruppe Z, die zusammen mit dem Phosphoratom und den beiden Sauerstoffatomen einen 5- oder 6-gliedrigen Ring bildet, seien genannt: 1,2-Ethylen, 1,2- und 1,3-Propylen, 1,2-Butylen,

Tetramethyl-1,2-ethylen, 2,2-Dimethyl-1,3-propylen, 2-Methyl-2-ethyl-1,3-propylen, 1,1,3-Trimethyl-1,3-propylen, 1-Propyl-2,2-dimethyl-1,2-ethylen und 1-Propyl-2,2-dimethyl-1,3-propylen. Bevorzugt ist Z eine verzweigte 1,2- oder 1,3-Alkylengruppe mit höchstens 8 Kohlenstoffatomen. Besonders bevorzugt ist eine 1,3-Alkylengruppe, insbesondere 2,2-Dimethyl-1,3-propylen und 1-Propyl-2,2-dimethyl-1,3-propylen.

Von Interesse sind Verbindungen der Formel I, worin n 1, 2 oder 3 bedeutet, $R^1$ Methyl, tert-Butyl oder Cyclohexyl ist und wenn n 1 bedeutet, X eine Gruppe der Formel II oder III darstellt, worin Y eine direkte Bindung, -S- oder $-CR^4R^5-$ bedeutet, worin $R^4$ und $R^5$ unabhängig voneinander Wasserstoff oder $C_1$-$C_4$-Alkyl sind, und Z 1,2- oder 1,3-Alkylen mit höchstens 8 Kohlenstoffatomen ist.

Von besonderem Interesse sind Verbindungen der Formel I, worin n 1, 2 oder 3 ist, $R^1$ Methyl oder tert-Butyl bedeutet und wenn n 1 ist, X eine Gruppe der Formel II oder III darstellt, worin $R^2$ und $R^3$ unabhängig voneinander $C_1$-$C_4$-Alkyl sind und $R^3$ zusätzlich Cyclohexyl bedeutet, Y -S-, $-CH_2-$ oder $-CH(C_1$-$C_4$-Alkyl)- ist und Z eine in 2-Stellung verzweigte 1,3-Alkylengruppe mit 4 bis 8 Kohlenstoffatomen bedeutet.

Bevorzugt sind Verbindungen der Formel I, worin n 1, 2 oder 3 bedeutet, wenn n 1 ist, X eine Gruppe der Formel II darstellt und wenn n 2 ist, X eine Gruppe der Formel IV bedeutet.

Besonders bevorzugt sind Verbindungen der Formel I, worin n 1, 2 oder 3 bedeutet und wenn n 1 ist, x eine Gruppe der Formel II oder III darstellt, worin Y -S-, $-CH_2-$ oder $-CHCH_3-$ ist und Z eine in 2-Stellung verzweigte 1,3-Alkylengruppe mit 4 bis 8 Kohlenstoffatomen ist.

Ebenfalls von Interesse sind Verbindungen der Formel I, worin n 1, 2 oder 3 bedeutet, $R^1$ $C_1$-$C_4$-Alkyl ist und wenn n 1 ist, X eine Gruppe der Formel II oder III darstellt, worin $R^2$ und $R^3$ unabhängig voneinander $C_1$-$C_4$-Alkyl sind, Y $-CH_2-$ bedeutet und Z eine in 2-Stellung verzweigte 1,3-Alkylengruppe mit 4 bis 8 Kohlenstoffatomen ist, und wenn n 2 bedeutet, X eine Gruppe der Formel IV darstellt.

n ist bevorzugt 1 oder 2.

Beispiele für Verbindungen der Formel I sind:

a) 3,9-Bis[3′,5′-bis(3″,5″-di-tert-butyl-4″-hydroxybenzyl)2′,4′,6′-trimethylphenoxy]-2,4,8,10-tetraoxa-3,9-diphosphaspiro[5,5]undecan

b) 3,9-Bis[3′,5′-bis(3″-tert-butyl-5″-methyl-4″-hydroxybenzyl)2′,4′,6′-trimethylphenoxy]-2,4,8,10-tetraoxa-3,9-diphosphaspiro[5,5]undecan

c) 3,9-Bis[3′,5′-bis(3″-tert-butyl-5″-cyclohexyl-4″-hydroxybenzyl)2′,4′,6′-trimethylphenoxy]-2,4,8,10-tetraoxa-3,9-diphosphaspiro[5,5]undecan

d) 2-[3′,5′-Bis(3″,5″-di-tert-butyl-4″-hydroxybenzyl)2′,4′,6′-trimethylphenoxy]-5,5-dimethyl-[1,3,2]dioxaphosphinan

e) 2-[3′,5′-Bis(3″-tert-butyl-5″-methyl-4″-hydroxybenzyl)2′,4′,6′-trimethylphenoxy]- 5,5-dimethyl-[1,3,2]dioxaphosphinan

f) 2-[3′,5′-Bis(3″,5″-di-tert-butyl-4″-hydroxybenzyl)2′,4′,6′-trimethylphenoxy]-2,4,8,10-tetra-tert-butyl-dibenzo[d,g][1,3,2]dioxaphosphocin

g) 2-[3′,5′-Bis(3″,5″-di-tert-butyl-4″-hydroxybenzyl)2′,4′,6′-trimethylphenoxy]-2,4,8,10-tetramethyl-dibenzo[d,g][1,3,2]dioxaphosphocin

h) 2-[3′,5′-Bis(3″-tert-butyl-5″-methyl-4″-hydroxybenzyl)2′,4′,6′-trimethylphenoxy]-2,4,8,10-tetra-tert-butyl-dibenzo[d,g][1,3,2]dioxaphosphocin

i) 2-[3′,5′-Bis(3″-tert-butyl-5″-methyl-4″-hydroxybenzyl)2′,4′,6′-trimethylphenoxy]-2,4,8,10-tetramethyl-dibenzo[d,g][1,3,2]dioxaphosphocin

j) 2-[3′,5′-Bis(3″,5″-di-tert-butyl-4″-hydroxybenzyl)2′,4′,6′-trimethylphenoxy]-2,10-dimethyl-4,8-dicyclohexyl-dibenzo[d,g][1,3,2]dioxaphosphocin

k) 2-[3′,5′-Bis(3″,5″-di-tert-butyl-4″-hydroxybenzyl)2′,4′,6′-trimethylphenoxy]-2,10-dimethyl-4,8-di-tert-butyl-dibenzo[d,g][1,3,2]dioxaphosphocin

l) 2-[3′,5′-Bis(3″,5″-di-tert-butyl-4″-hydroxybenzyl)2′,4′,6′-trimethylphenoxy]-2,4,8,10-tetra-tert-butyl-dibenzo[d,g][1,3,2,6]dioxaphosphathiocin

m) 2-[3′,5′-Bis(3″,5″-di-tert-butyl-4″-hydroxybenzyl)2′,4′,6′-trimethylphenoxy]-2,10-dimethyl-4,8-di-tert-butyl-dibenzo[d,g][1,3,2,6]dioxaphosphathiocin

n) 2-[3′,5′-Bis(3″,5″-di-tert-butyl-4″-hydroxybenzyl)2′,4′,6′-trimethylphenoxy]-2,10-dimethyl-4,8-di-tert-butyl-12-methyl-dibenzo[d,g][1,3,2]dioxaphosphocin

o) Tris[3,5-bis(3′,5′-di-tert-butyl-4′-hydroxybenzyl)2,4,6-trimethylphenyl]phosphit

p) Tris[3,5-bis(3′,5′-di-tert-butyl-4′-hydroxybenzyl)2,4,6-trimethylphenyl]phosphit

Die Verbindungen a), d), f), k) und p) sind besonders bevorzugt.

Die Verbindungen der Formel I, worin n 1 oder 2 bedeutet, können in Analogie zu bekannten Verfahren hergestellt werden; beispielsweise durch Umsetzung von n Mol eines Phenols der Formel VI,

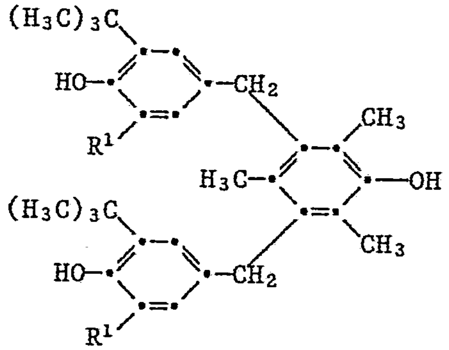

(VI)

worin $R^1$ die oben angegebene Bedeutung hat, mit einem Mol eines Chlorphosphits der Formel VII,
$(Cl \rightarrow_{n} X$ (VII)
worin X die oben angegebenen Definitionen besitzt und n 1 oder 2 ist, in einem organischen Lösungsmittel in Gegenwart eines basischen Katalysators bei einer Temperatur, die zwischen 0°C und dem Siedepunkt des verwendeten Lösungsmittels liegt. Als organische Lösungsmittel können beispielsweise chlorierte Kohlenwasserstoffe, aromatische Kohlenwasserstoffe, wie z.B. Toluol oder Xylol, oder polare, aprotische Lösungsmittel, wie z.B. Dimethylformamid, verwendet werden. Geeignete basische Katalysatoren sind zum Beispiel Alkali-und Erdalkalihydroxide, Alkali- und Erdalkalicarbonate, tertiäre Amine, bevorzugt Pyridin und Trialkylamine, wie z.B. Trimethylamin, Triethylamin und Tributylamin. Es ist vorteilhaft, die Base mindestens in der äquivalenten Menge einzusetzen, die zur Entfernung des sich während der Reaktion bildenden Chlorwasserstoffs notwendig ist. Die Reaktionszeit kann z.B. 2 bis 30 Stunden betra gen. Nach Beendigung der Umsetzung können die Salze, die sich aus der eingesetzten Base und dem während der Reaktion freiwerdenden Chlorwassserstoff gebildet haben, abfiltriert werden. Nach Entfernung des Lösungsmittels ist es zweckmässig, das Rohprodukt nach üblichen Methoden (z.B. Umkristallisation oder Säulenchromatographie) aufzuarbeiten.

In einer Variante zu dem obigen Herstellungsverfahren kann auch ein Alkalisalz der Verbindung der Formel VI oder ein Gemisch aus einer Verbindung der Formel VI und dessen Alkalisalz eingesetzt werden. Als Alkalisalze werden zweckmässigerweise die Lithium-, Natrium- und Kaliumsalze des Phenols der Formel VI eingesetzt.

Die Verbindungen der Formel I, worin n 3 bedeutet, können durch Umsetzung von 3 Mol eines Phenols der Formel VI oder dessen Alkalimetallsalzes mit einem Mol $PCl_3$ in Analogie zu dem oben beschriebenen Verfahren hergestellt werden.

Die Ausgangsprodukte der Formel VI sind bekannt (teilweise im Handel erhältlich) und können in Analogie zu bekannten Verfahren, beispielsweise wie in US-A-4 513 109 beschrieben, hergestellt werden.

Die Chlorphosphite der Formel VII sind ebenfalls bekannt und können aus den entsprechenden Diolen und $PCl_3$ hergestellt werden, wie es zum Beispiel im J. Am. Chem. Soc. 72, 5491-7 (1950) beschrieben ist.

Die Verbindungen der Formel I eignen sich zum Stabilisieren von organischen Materialien gegen lichtinduzierten und/oder thermooxidativen Abbau. Beispiele für derartige Materialien sind:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-(α-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymer, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit termoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4- trimethylhexamethylenterephthalamid, Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethyolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Ein weiterer Gegenstand der Erfindung sind daher Zusammensetzungen, die organisches Material und mindestens eine Verbindung der Formel I enthalten.

Bei den organischen Materialien handelt as sich vorzugsweise um die oben angegebenen, insbesondere um synthetische Polymere, wie etwa thermoplastische Kunststoffe (z.B. Polyolefine, Styrolcopolymere) und Elastomere. Besonders bevorzugt sind Polyolefine, vor allem Polyethylen und Polypropylen, sowie Mischpolymerisate davon.

Im allgemeinen werden die erfindungsgemässen Verbindungen dem zu stabilisierenden organischen Material in Mengen von 0,01 bis 10 %, bevorzugt 0,05 bis 5 %, insbesondere 0,1 bis 2 % bezogen auf das Gesamtgewicht des zu stabilisierenden Materials, zugesetzt. Die stabilisierten Polymerzusammensetzungen der Erfindung können zusätzlich auch verschiedene herkömmliche Additive enthalten, wie beispielsweise:

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Dicyclopentyl-4-methylphenol, 2-(α-Methylcyclohexyl)4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether, z.B. 2,2'-Thio-bis-(6-tert.butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Bis-(3-tert.butyl-4-hydroxy-5-methylphenyl)-dicyclopentadien, Bis-[2-(3'-tert.butyl-2'-hydroxy-5'-methyl-benzyl)-6-tert.butyl-4-methyl-phenyl]-terephthalat.

1.5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxy-stearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z. B. mit methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Oxtoxy-, 3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-oxtyloxy-5,5'-di-tert.butyl-oxanilid, 2,2'-Di-dodecyloxy-5,5'-di-tert.butyl-oxanilid,2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphit, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Die Einarbeitung der erfindungsgemässen Stabilisatorsubstanzen und allenfalls weiterer Zusätze in das

organische Material erfolgt nach bekannten Methoden. Sie kann beispielsweise durch Einmischen der erfindungsgemässen Produkte und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels, erfolgen. Die erfindungsgemässen Produkte können auch in Form eines Masterbatches, der diese beispielsweise in einer Konzentration von 2,5 bis 25 Gew.-% enthält, den zu stabilisierenden Materialien zugesetzt werden. Die erfindungsgemässen Produkte können auch vor oder während der Polymerisation oder vor der Vernetzung zugegeben werden.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Für die Stabilisierung von organischem Material kann es vorteilhaft sein, die erfindungsgemässen Verbindungen zusammen mit sogenannten "Peroxidzerstörern", wie zum Beispiel Distearylthiodipropionat, einzusetzen.

Die Verbindungen der Formel I sind auch besonders vorteilhafte Verarbeitungsstabilisatoren für Polyethylen niedrigerer und hoher Dichte.

Die folgenden Beispiele erläutern die Erfindung weiter. Alle Prozentangaben beziehen sich, ebenzo wie in der übrigen Beschreibung, auf das Gewicht, soweit nicht anders angegeben.

Beispiel 1: Herstellung von 3,9-Bis[3′,5′-bis(3″,5″-di-tert-butyl-4″-hydroxybenzyl)2′,4′6′-trimethylphenoxy]-2,4,8,10-tetraoxa-3,9-diphosphaspiro[5,5]undecan der Formel

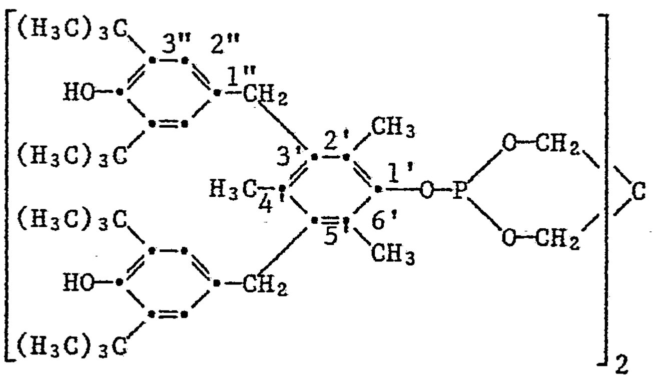

Zu einer Lösung von 13,25 g (0,05 Mol) 3,9-Dichlor-2,4,8,10-tetraoxa-3,9-diphosphaspiro[5,5]undecan in 30 ml Xylol werden bei einer Temperatur zwischen 5 und 10°C 57,28 g (0,1 Mol) 3,5-Bis[3′,5′-di-tert-butyl-4′-hydroxybenzyl]-2,4,6-trimethylphenol und 57,7 g Triethylamin in 300 ml Xylol innerhalb von 10 Minuten zugetropft. Das Reaktionsgemisch wird 21 Stunden bei Raumtemperatur gerührt. Anschliessend werden die unlöslichen Teile abfiltriert und das Filtrat bis zur Trockne eingedampft. Man erhält 57,5 g eines farblosen Produktes, das einen Schmelzpunkt von 246°C besitzt.

Elementaranalyse:
Berechnet: P 4,63 %
Gefunden: P 4,48 %

Beispiel 2: Herstellung von 2-[3′,5′-Bis(3″,5″-di-tert-butyl-4″-hydroxybenzyl)2′,4′,6′-trimethylphenoxy]-5,5-dimethyl-[1,3,2]dioxaphosphinan der Formel

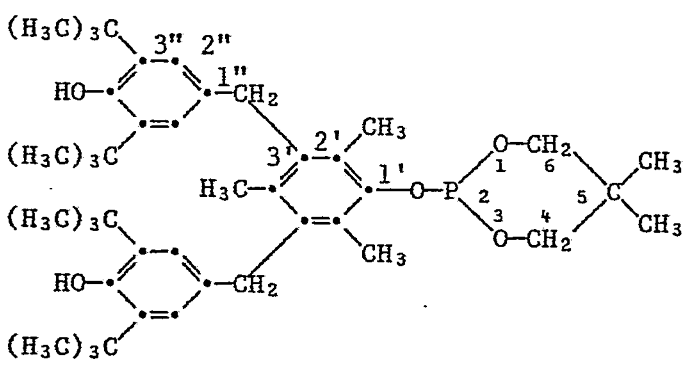

Zu einer Lösung von 28,65 g 3,5-Bis[3′,5′-di-tert-butyl-4′-hydroxybenzyl]-2,4,6-trimethylphenol und 25,3 g Triethylamin in 150 ml Toluol wird innerhalb von 15 Minuten bei einer Temperatur zwischen 20 und 30°C eine

Lösung von 8,45 g 2-Chlor-5,5-dimethyl-[1,3,2]dioxaphosphinan in 50 ml Toluol zugetropft. Das Reaktionsgemisch wird 24 Stunden unter Rückfluss erwärmt. Nach Abkühlung auf Raumtemperatur wird der Rückstand abfiltriert und das Filtrat bis zur Trockne eingedampft. Man erhält 35 g eines farblosen Produktes, das einen Schmelzpunkt von 190°C besitzt.

Elementaranalyse:
Berechnet: P 4,39 %
Gefunden: P 4,31 %

Beispiel 3: Herstellung von 2-[3′,5′-Bis(3″,5″-di-tert-butyl-4″-hydroxybenzyl)2′,4′6′-trimethylphenoxy]-2,4,8,10-tetra-tert-butyldibenzo[d,g][1,3,2]dioxaphosphocin der Formel

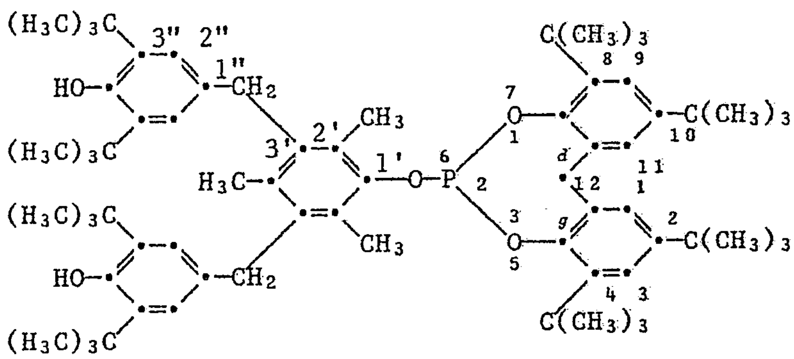

Die Herstellung erfolgt in Analogie zu Beispiel 2. Als Chlorphosphit werden 12,23 g 2-Chlor-2,4,8,10-tetra-tert-butyl-dibenzo[d,g][1,3,2]dioxaphosphocin eingesetzt. Nach säulenchromatographischer Reinigung erhält man 18,54 g eines farblosen Pulvers, das einen Schmelzpunkt von 136°C besitzt.

Elementaranalyse:
Berechnet: P 3,02 %
Gefunden: P 2,89 %

Beispiel 4: Herstellung von 2-[3′,5′-Bis(3″,5″-di-tert-butyl-4″-hydroxybenzyl)2′,4′,6′-trimethylphenoxy]-4,8-di-tert-butyl-2,10-dimethyl-dibenzo[d,g][1,3,2]dioxaphosphocin der Formel

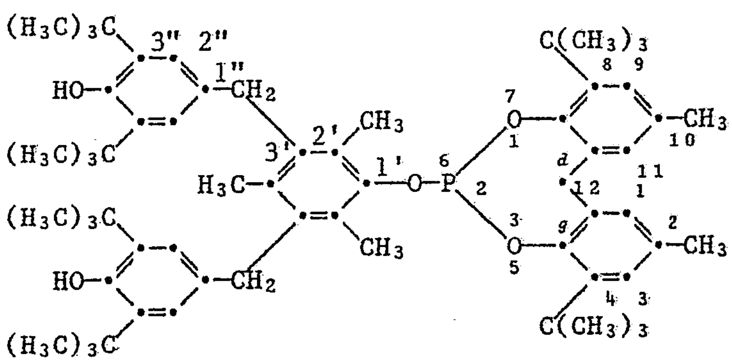

Die Herstellung erfolgt in Analogie zu Beispiel 2. Als Chlorphosphit werden 10,12 g 2-Chlor-4,8-di-tert-butyl-2,10-dimethyl-dibenzo[d,g][1,3,2]dioxaphosphocin eingesetzt. Nach säulenchromatographischer Reinigung erhält man als Produkt 10 g eines farblosen Pulvers, das einen Schmelzpunkt von 127°C besitzt.

Elementaranalyse:
Berechnet: P 3,29 %
Gefunden: P 3;37 %

Beispiel 5: Herstellung von Tris[3,5-bis(3′,5′-di-tert-butyl-4′-hydroxybenzyl)2,4,6-trimethylphenyl]phosphit der Formel

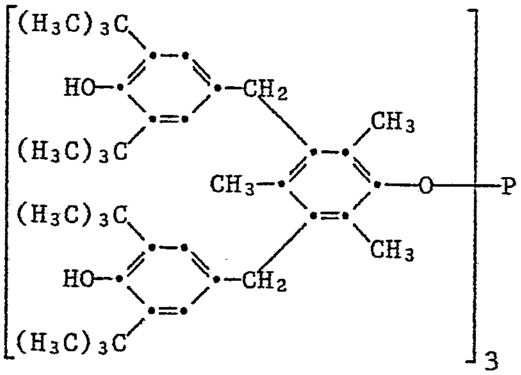

Zu einer Lösung von 51,6 g (0,09 Mol) 3,5-Bis(3′,5′-di-tert-butyl-4′-hydroxybenzyl)2,4,6-trimethylphenol in 250 ml Toluol und 9,1 g Triethylamin wird bei einer Temperatur zwischen 0° und 5° C eine Lösung von 4,1 g (0,03 Mol) Phosphortrichlorid in 10 ml Toluol innerhal von 60 Minuten getropft. Das Reaktionsgemisch wird 16 Stunden bei 70° C gerührt. Bei Raumtemperatur werden die unlöslichen Anteile abfiltriert und das Filtrat wird bis zur Trockne eingedampft. Der Rückstand wird in 500 ml Toluol/Hexan (1:1) aufgenommen, filtriert und das Filtrat wird wiederum bis zur Trockne eingedampft. Man erhält 52 g eines farblosen Pulvers mit einem Schmelzpunkt von 255-257° C.

Elementaranalyse:
Berechnet: P 1,77 %
Gefunden: P 1,70 %

Beispiel 6: Polypropylenpulver (Schmelzindex bei 230° C und einer Prüfkraft von 2,16 kp: 2,3 g/ 10 min) enthaltend 0,1 % Kalziumstearat wird mit den in den nachstehenden Tabellen 1 und 2 aufgeführten Additiven gemischt und anschliessend in einem Brabender Plastographen bei 200° C 10 Minuten geknetet. Die so erhaltene Masse wird in einer Presse mit einer Oberflächentemperatur von 260° C zu 1 mm dicken Platten gepresst, aus denen Streifen von 1 cm Breite und 6,5 cm Länge gestanzt werden. Von jeder Platte werden mehrere solcher Streifen in einen auf 135° C bzw. 149° C geheizten Umluftofen gehängt und in regelmässigen Zeitabständen beobachtet. Die oxidative Zersetzung dieser Streifen lässt sich an einer kreisartig beginnenden Gelbverfärbung erkennen. Ein Mass für die Stabilität der Probe ist die Zeitdauer bis zur Zersetzung.

Tabelle 1:

| Stabilisator | Tage im Umluftofen bis zum Zerfall des Prüfkörpers | |
|---|---|---|
| | 135°C | 149°C |
| ohne | < 1 | < 1 |
| 0,2 % Verbindung aus Beispiel 1 | 58 | 18 |
| 0,2 % Verbindung aus Beispiel 2 | 56 | 15 |
| 0,2 % Verbindung aus Beispiel 3 | 69 | 16 |
| 0,2 % Verbindung aus Beispiel 4 | 69 | 16 |
| 0,2 % Verbindung aus Beispiel 5 | 71 | 20 |

Tabelle 2:

| Stabilisator | Tage im Umluftofen bis zum Zerfall des Prüfkörpers | |
|---|---|---|
| | 135°C | 149°C |
| 0,1 % Verbindung aus Beispiel 5 + 0,3 % Distearylthiodipropionat | 195 | 47 |

**Patentansprüche**

1. Verbindungen der Formel I,

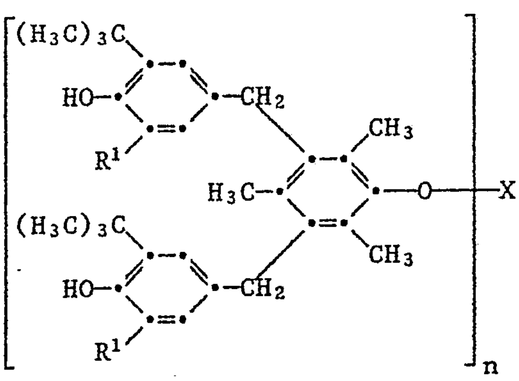

(I)

worin n 1, 2 oder 3 ist, $R^1$ $C_1$-$C_5$-Alkyl, Cyclohexyl oder $\alpha$-Methylcyclohexyl bedeutet und wenn n 1 ist, X eine Gruppe der Formel II oder III darstellt,

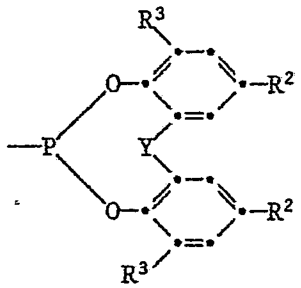 (II), 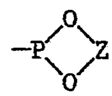 (III) .

worin $R^2$ und $R^3$ unabhängig voneinander $C_1$-$C_8$-Alkyl oder Cyclohexyl bedeuten, Y eine direkte Bindung, -S-, $>S=O$ oder ein Rest $-CR^4R^5$-ist, worin $R^4$ Wasserstoff, $C_1$-$C_8$-Alkyl, $C_5$-$C_8$-Cycloalkyl, Phenyl oder Benzyl bedeutet und $R^5$ Wasserstoff oder $C_1$-$C_8$-Alkyl ist, Z 1,2-oder 1,3-Alkylen mit höchstens 15 Kohlenstoffatomen oder o-Phenylen bedeutet, und wenn n 2 ist, X eine Gruppe der Formel IV oder V darstellt,

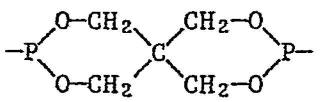 (IV)

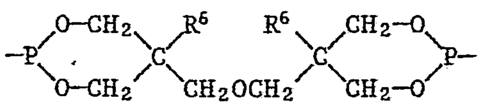 (V)

worin $R^6$ Methyl oder Ethyl ist, und wenn n 3 bedeutet, X ein Phosphoratom darstellt.

2. Verbindungen der Formel I gemäss Anspruch 1, worin n 1, 2 oder 3 bedeutet, $R^1$ Methyl, tert-Butyl oder Cyclohexyl ist und wenn n 1 bedeutet, X eine Gruppe der Formel II oder III darstellt, worin Y eine direkte Bindung, -S- oder $-CR^4R^5$- bedeutet, worin $R^4$ und $R^5$ unabhängig voneinander Wasserstoff oder $C_1$-$C_4$-Alkyl sind, und Z 1,2- oder 1,3-Alkylen mit höchstens 8 Kohlenstoffatomen ist.

3. Verbindungen der Formel I gemäss Anspruch 1, worin n 1, 2 oder 3 ist, $R^1$ Methyl oder tert-Butyl bedeutet und wenn n 1 ist, X eine Gruppe der Formel II oder III darstellt, worin $R^2$ und $R^3$ unabhängig voneinander $C_1$-$C_4$-Alkyl sind und $R^3$ zusätzlich Cyclohexyl bedeutet, Y -S-, $-CH_2$- oder $-CH(C_1$-$C_4$-Alkyl)-ist und Z eine in 2-Stellung verzweigte 1,3-Alkylengruppe mit 4 bis 8 Kohlenstoffatomen bedeutet.

4. Verbindungen der Formel I gemäss Anspruch 1, worin n 1, 2 oder 3 bedeutet, wenn n 1 ist, X eine Gruppe der Formel II darstellt und wenn n 2 ist, X eine Gruppe der Formel IV bedeutet.

5. Verbindungen der Formel I gemäss Anspruch 1, worin n 1 oder 2 ist.

6. Verbindungen der Formel I gemäss Anspruch 1, worin $R^1$ tert-Butyl bedeutet.

7. Verbindungen der Formel I gemäss Anspruch 1, worin n 1, 2 oder 3 bedeutet und wenn n 1 ist, X eine Gruppe der Formel II oder III darstellt, worin Y -S-, $-CH_2$- oder $-CHCH_3$- ist und Z eine in 2-Stellung verzweigte 1,3-Alkylengruppe mit 4 bis 8 Kohlenstoffatomen ist.

8. Verbindungen der Formel I gemäss Anspruch 1, worin n 1, 2 oder 3 bedeutet, $R^1$ $C_1$-$C_4$-Alkyl ist und wenn n 1 ist, X eine Gruppe der Formel II oder III darstellt, worin $R^2$ und $R^3$ unabhängig voneinander $C_1$-$C_4$-Alkyl sind, Y $-CH_2$- bedeutet und Z eine in 2-Stellung verzweigte 1,3-Alkylengruppe mit 4 bis 8 Kohlenstoffatomen ist, und wenn n 2 bedeutet, X eine Gruppe der Formel IV darstellt.

9. Die Verbindungen
3,9-Bis[3′,5′-bis(3″,5″-di-tert-butyl-4″-hydroxybenzyl)2′,4′,6′-trimethylphenoxy]-2,4,8,10-tetraoxa-3,9-diphosphaspiro[5,5]undecan,
2-[3′,5′-Bis(3″,5″-di-tert-butyl-4″-hydroxybenzyl)2′,4′,6′-trimethylphenoxy]-5,5-dimethyl-[1,3,2]dioxaphosphinan,
2-[3′,5′-Bis(3″,5″-di-tert-butyl-4″-hydroxybenzyl)2′,4′,6′-trimethylphenoxy]-2,4,8,10-tetra-tert-butyl-dibenzo[d,g][1,3,2]dioxaphosphocin,
2-[3′,5′-Bis(3″,5″-di-tert-butyl-4″-hydroxybenzyl-2′,4′,6′-trimethylphenoxy]-4,8-di-tert-butyl-2,10-dimethyl-dibenzo[d,g][1,3,2]dioxaphosphocin und
Tris[3,5-bis(3′,5′-di-tert-butyl-4′hydroxybenzyl)2,4,6-trimethylphenyl]phosphit
gemäss Anspruch 1.

10. Zusammensetzung enthaltend organisches Material und mindestens eine Verbindung der Formel I gemäss Anspruch 1.

11. Zusammensetzung nach Anspruch 10, worin das organische Material ein synthetisches Polymer ist.

12. Zusammensetzung nach Anspruch 10, worin das organische Material ein Polyolefin ist.

13. Verwendung von Verbindungen der Formel I gemäss Anspruch 1 zum Stabilisieren von organischem Material gegen lichtinduzierten und/oder thermooxidativen Abbau.